# EUROPEAN PATENT APPLICATION

(11) **EP 2 848 782 A1**
(43) Date of publication of application: **18.03.2015**
(21) Application number: 14184950.5
(22) Date of filing: 16.09.2014
(51) Int. Cl.: F01N 3/08, F01N 3/20, F01N 9/00, F02M 25/07, F01N 3/10, F01N 3/035

(54) **Natural gas engine aftertreatment system**

(30) Priority: 16.09.2013 US 201314027364
(71) Applicant: International Engine Intellectual Property Company, LLC, Lisle, Illinois 60532 (US)
(72) Inventor: Mahakul, Budhadeb, Naperville, IL Illinois 60565 (US)
(74) Representative: Kuhnen & Wacker

(57) **Abstract**

Systems and methods for reducing methane in an aftertreatment system of a vehicle are described. An oxidation catalyst is disposed in an exhaust path between an engine block and a turbocharger. The oxidation catalyst stores methane in the exhaust gas from the engine block during low temperatures and oxidizes the stored methane during high temperatures. The temperatures at the oxidation catalyst are controlled, in part, by operating engine cycles and/or a back pressure valve that can adjust pressure in the exhaust path and/or increase engine load.

## Description

### BACKGROUND

Starting in 2014, on-highway engines are to be in compliance with new greenhouse gas regulations including, possibly for the first time, methane hydrocarbon emissions. Natural gas engines, in particular, emit high amounts of methane (CH₄), which contribute to greenhouse gas emissions. Some consider methane to have a global warming potential that is 25 times greater than carbon dioxide (CO₂).

One of the challenges of methane emission control is that, for example, methane combustion/oxidation occurs at high temperatures (e.g., greater than approximately 350-450°C).

In addition, platinum group metals (PGM) and metal oxides containing catalysts are not active at low temperatures.

### SUMMARY

Some embodiments relate to systems and methods of methane reduction in aftertreatment systems and, in particular, in aftertreatment systems in natural gas engines.

Some embodiments provide that oxidation catalysts are introduced upstream of a turbocharger and downstream of an exhaust outtake of an engine block to provide high exhaust temperatures for use in oxidizing methane.

Some embodiments provide that methane is adsorbed at low temperatures using a catalytic substrate. At high temperatures, the adsorbed methane undergoes catalytic combustion. The catalyst can include, for example, non-PGM metal oxides dispersed on a zeolite substrate. The zeolite substrate can provide low temperature storage and oxides for combustion.

Some embodiments provide that substrate material and catalyst combinations are contemplated that adsorb methane emissions at low temperatures and then releases oxidized methane at high temperatures that result in lowering methane hydrocarbon emission.

Some embodiments provide an aftertreatment system for use in a vehicle that includes an oxidation catalyst disposed in an exhaust path between an engine block and a turbocharger. The oxidation catalyst is configured to store methane during a first temperature of a first portion of an operating engine cycle and to oxidize the stored methane during a second temperature of a second portion of the operating engine cycle in which the first temperature is less than the second temperature.

Some embodiments provide a method of reducing methane emissions in a vehicle. An oxidation catalyst is provided in an exhaust path between an engine block and a turbocharger. Methane is stored during a first temperature. The stored methane is oxidized during a second temperature that is greater than the first temperature. A back pressure valve is provided to increase pressure in the exhaust path or to increase engine load. The temperature is increased from the first temperature to the second temperature by increasing, via the back pressure valve, the pressure or the engine load.

Some embodiments provide for exhaust temperature management (e.g., at light load) by providing engine speed and higher back pressure to increase the engine load which, in turn, increases exhaust temperature.

### BRIEF DESCRIPTION OF THE DRAWINGS

FIG. 1 is an embodiment of a natural gas engine aftertreatment system.
FIG. 2 is another embodiment of the natural gas engine aftertreatment system.
FIG. 3A is a chart illustrating methane conversions for different materials over temperature.
FIG. 3B is another chart illustrating methane conversions for yet other materials over temperature.

### DETAILED DESCRIPTION

Some embodiments relate to systems and methods of methane reduction in aftertreatment systems and, in particular, in aftertreatment systems in natural gas engines.

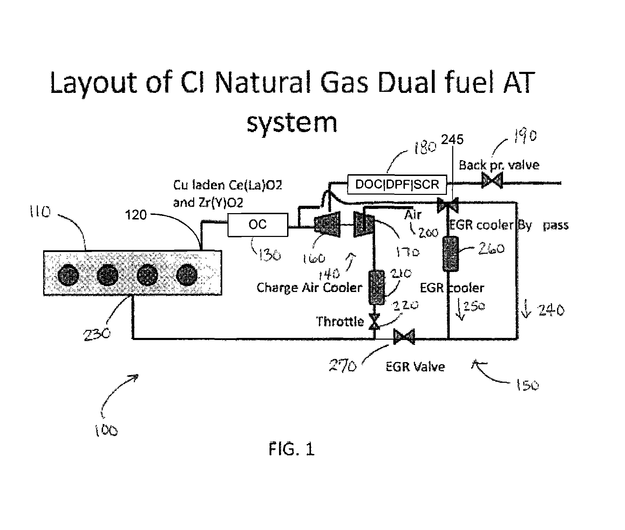

Referring to FIG. 1, a layout of an embodiment of a compression-ignition (CI) natural gas engine aftertreatment system 100 is shown. The aftertreatment system 100 can be used, for example, with dual fuel engines (e.g., natural gas and diesel engines). As illustrated, a cylinder block 110 has an exhaust outtake 120 that is coupled to an oxidation catalyst (OC) 130. The OC 130 is then coupled to a turbocharger system 140 and to an exhaust gas recirculation (EGR) system 150.

In some embodiments, the OC 130 can be include, for example, a zeolite substrate that is Cu laden with, for example, one or more of the following: CuCe(La)O₂ and CuZr(Y)O₂. In some embodiments, the zeolite substrate can include, for example, one or more of the following: CuCe(La), Ce(La)O₂, CeO₂, CuZr(Y), Zr(Y)O₂ and ZrO₂. Some embodiments contemplate designing zones of coating and size for methane storage and oxidation.

The turbocharger system 140 can include, for example, a turbine 160 coupled to a compressor 170. The turbine is coupled to a device that includes of one or more of the following: a diesel oxidation catalyst, a diesel particulate filter, and a selective catalytic reduction. The device illustrated in FIG. 1 as DOC/DPF/SCR 180 is then coupled to a back pressure valve 190. The compressor 170 is coupled to an air supply 190. The compressor 170 is also coupled to a charge air cooler 210 and a throttle 220. The throttle 220 is coupled to an intake 230 of the engine block 110.

The EGR system 150 can include, for example, an EGR cooler bypass path 240 and an EGR cooler path 250. The EGR cooler path 250 can include, for example, an EGR cooler 260. Both paths 240 and 250 are coupled to an EGR valve 270 which, in turn, is coupled to the intake 230 of the engine block 110.

In operation, the engine block 110 outputs exhaust (e.g., exhaust gas or exhaust gas stream) from the exhaust outtake 120. In some embodiments, the exhaust gas coming out of a cylinder of the engine block 110 is in direct contact with the methane storage and oxidation catalyst of the OC 130. The temperature of the exhaust gas is substantially higher than the temperature of the exhaust gas after passing through the turbine 160 of the turbocharger system 140. It is, in part, the substantially higher temperature of the exhaust gas that provides for methane hydrocarbon oxidation.

The temperature at the OC 130 can be cycled due, in part, to engine operating cycles of the engine block 110 and/or due, in part, to control of the back pressure valve 190. In light load, the back pressure valve 190 can raise the temperature of the exhaust. In some embodiments, the back pressure valve 190 is configured such that when the back pressure valve 190 is closed, the pressure at the OC 130 increases, and that when the back pressure valve 190 is opened, the pressure at the OC 130 decreases. Methane (CH₄) gas in the exhaust is adsorbed at the OC 130 at low temperatures. The adsorbed methane undergoes catalytic combustion at high temperatures. At high temperatures, the OC 130 provides oxides that are used to oxidize the adsorbed methane.

Since the OC 130 is disposed between the turbocharger system 140 and the engine block 110, the temperature at the OC 130 can be high. By placing the oxidation catalyst upstream of the turbocharger system 140, the OC 130 can use the higher exhaust temperature for methane oxidation since the high temperature enhances the methane reduction. In addition, the back pressure valve 190 in the exhaust path can be closed to raise engine load and to increase exhaust temperatures include, for example, the temperature at the OC 130.

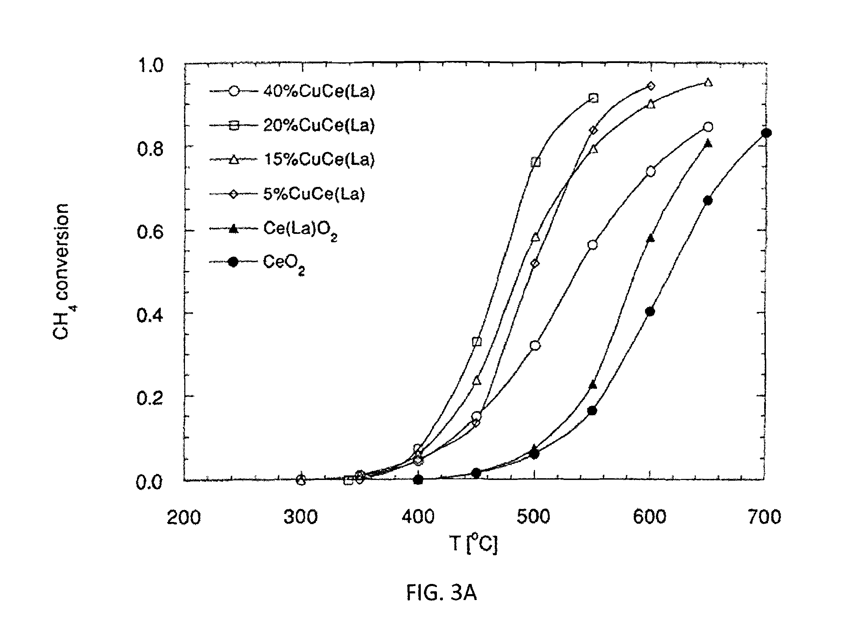

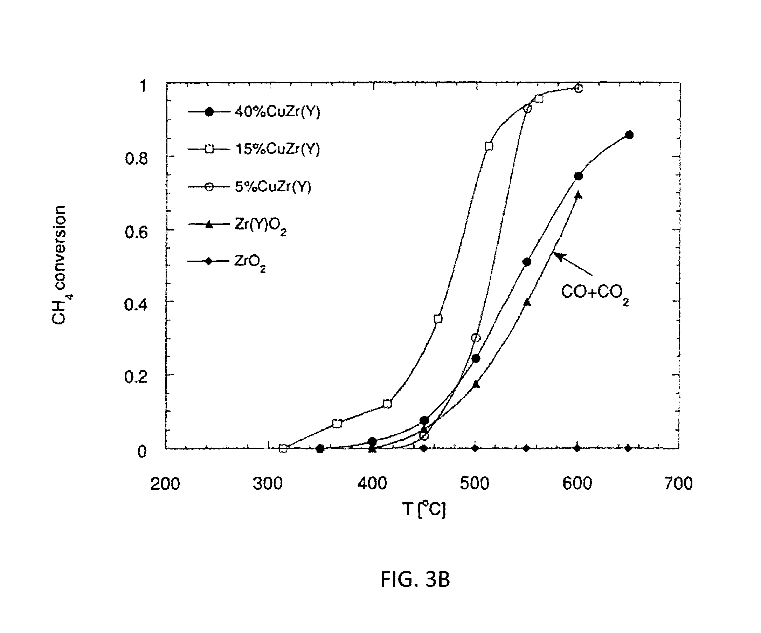

FIGS. 3A-B show how the methane conversion (e.g., methane reduction or methane oxidation) increases with temperature for various materials and compositions of materials including, for example, CuCe(La), Ce(La)O₂, CeO₂, CuZr(Y), Zr(Y)O₂ and ZrO₂. See, e.g., Kundakovic et al., Appl. Cat., 171 (1978) 13-29. FIGS. 3A-B illustrate CuO that is dispersed in La-doped CeO₂ and Y-doped ZrO₂. In Cu/Ce(La)O₂ and/or CuO/Zr(Y)O₂, the CeO₂ is active for methane oxidation. The catalysts are active in the range of approximately 300-550°C. The amount of CuO and the amount of dispersant placed a role in methane conversion. In addition, copper clusters dispersed on the support are highly active.

Continuing with the explanation of the operation and referring to FIG. 1, the exhaust (e.g., exhaust gas) exits the OC 130 and enters the turbine 160 of the turbocharger system and the EGR system 150. With respect to the exhaust path through the turbocharger system 140, the exhaust powers the turbine 160 which, in turn, powers the compressor 170 via, for example, a rotor shaft. Once the exhaust powers the turbine 160, the exhaust passes to the DOC/DPF/SCR 180. The air supply 200 supplies air to the compressor 170 which, in turn, compresses the air. Due to the compression, the temperature of the air increases. The charge air cooler 210 (e.g., an intercooler) cools the compressed air. The throttle 220 throttles the air before passing the air to the intake 230 of the engine block 110.

With respect to the exhaust path through the EGR system 150, the exhaust can either bypass the EGR cooler 250 or pass through the EGR cooler 250. In some embodiments, the EGR cooler 250 cools the exhaust to reduce combustion temperatures in the engine block 110. Lower temperatures can reduce the amounts of greenhouse gases (e.g., NOx) produced by the engine block 110. Dependent upon whether the EGR valve is opened or closed, the exhaust passes from the EGR system 150 into the intake 230 of the engine block 110.

In some embodiments, the EGR bypass valve 245 is opened at light load to raise the intake manifold temperature which, in turn, raises in-cylinder combustion temperature and exhaust temperatures to enable oxidation of methane hydrocarbons. Further, the use of EGR system 150 at light load will employ less throttling of the engine to maintain the appropriate air fuel mixture. The reduction in throttling loss improves fuel consumption according to some embodiments.

In the back end of the aftertreatment system 100, the DOC/DPF/SCR 180 further reduces greenhouse gases (e.g., NOx). In some embodiments, a DOC portion of the DOC/DPF/SCR 180 uses oxygen in the exhaust to convert carbon monoxide (CO) to carbon dioxide (CO₂), and to convert hydrocarbons (HCs) to water (H₂O) and carbon dioxide. In addition, a DPF portion of the DOC/DPF/SCR trap soot (e.g., particulates). In some embodiments, the DOC/DPF/SCR 180 is a combined DOC/DPF/SCR. In other embodiments, the DOC/DPF/SCR 180 is a combined DOC/DPF. Some embodiments contemplate using one or more of the DOC, DPF, and SCR in the DOC/DPF/SCR 180. In some embodiments, the DOC/DPF/SCR 180 is the SCR. In embodiments that include the SCR, the SCR can be used, for example, to convert NOx to nitrogen (N₂) and water.

The back pressure valve 190, as mentioned above, can be closed or opened as desired to increase or decrease pressure in the exhaust system. For example, a closed back pressure valve 190 will increase the pressure and thus the temperature at the OC 130.

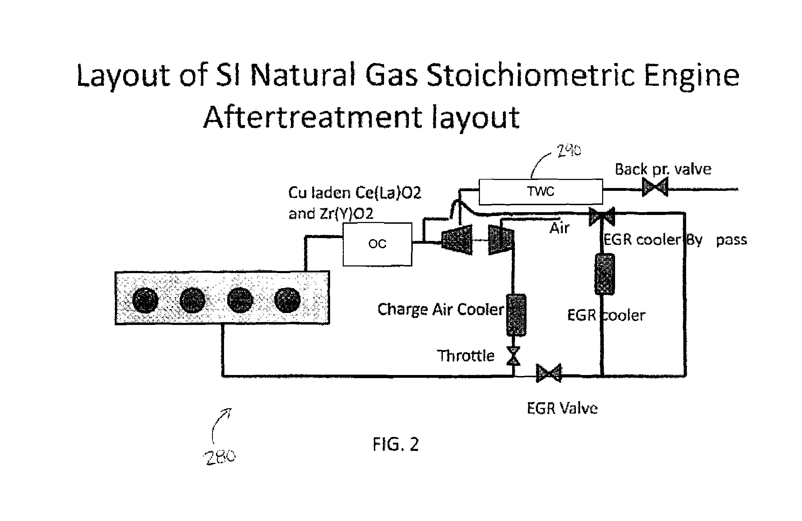

Referring to FIG. 2, a layout of an embodiment of a spark-ignition (SI) natural gas stoichiometric engine aftertreatment system 280 is shown. Besides illustrating an SI stoichiometric engine aftertreatment system 280 instead of a CI dual fuel engine aftertreatment system 100 (as illustrated in FIG. 1), one of the differences is that FIG. 2 illustrates a three-way catalyst (TWC) 290 instead of the DOC/DPF/SCR 180. In some embodiments, the TWC 290 is used with the natural gas stoichiometric engine aftertreatment system 280 to provide one or more catalysts on a substrate to oxidize carbon monoxide and unburned hydrocarbons, and to reduce NOx to produce carbon dioxide, nitrogen and water. With respect to the other components in FIG. 2, they also appear in FIG. 1 and function as previously described.

Some embodiments provide systems and methods of methane oxidation, combustion or reduction in aftertreatment systems and, in particular, in aftertreatment systems in natural gas or dual fuel engines.

Some embodiments provide that oxidation catalysts are introduced upstream of a turbocharger and downstream of an exhaust outtake of an engine block to provide high exhaust temperatures for use in oxidizing methane.

Some embodiments provide that methane is adsorbed at low temperatures using a catalytic substrate. At high temperatures, the adsorbed methane undergoes catalytic combustion. The catalyst can include, for example, non-PGM metal oxides dispersed on a zeolite substrate. The zeolite substrate can provide low temperature storage and oxides for combustion.

Some embodiments provide that substrate material and catalyst combinations are contemplated that adsorb methane emissions at low temperatures and then releases oxidized methane at high temperatures that result in lowering methane hydrocarbon emission.

Some embodiments provide for exhaust temperature management (e.g., at light load) by providing engine speed and higher back pressure to increase the engine load which, in turn, increases exhaust temperature.

Some embodiments contemplate that there is a trade-off between sizing and performance in reducing methane emissions to maintain reasonable engine compartment packaging.

Some embodiments contemplate that controls are provided that address desoot and de-SOx to maintain catalyst performance.

Some embodiments contemplate that the oxidation catalyst that controls methane emissions is applicable for SI and diesel-pilot-ignition-type (DPI-type) natural gas engines.

Some embodiments contemplate that the oxidation catalyst is applicable for reducing non-methane hydrocarbon (NMHC) emissions. Examples of NMHCs include, for example, ethylene (C₂H₄), ethane (C₂H₆), propane (C₃H₈), etc.

Some embodiments contemplate using PGM-based and/or non-PGM-based catalysts.

Some embodiments contemplate matching the oxidation catalyst with post-turbo DOC+EGNR aftertreatment for natural gas engines with lean (e.g., non-stoichiometric) combustion.

Some embodiments provide the oxidation catalyst between the turbocharger and the engine block for use with vehicles such as, for example, light duty trucks, medium duty trucks, heavy duty trucks, cars, motor bikes, motorcycles, boats, buses, vans, minivans, trucks, sports utility vehicles (SUVs), natural gas vehicles, hybrid fuel vehicles, dual fuel vehicles, multiple fuel vehicles, etc.

Some embodiment use elements, components and/or perform operations that are used in one or more of the above-disclosed embodiments. Thus, for example, an element or component in one embodiment can be combined with an element or component in another embodiment to provide yet another embodiment. In addition, some embodiments contemplate different levels of integration between the various elements or components.

## Claims

1. An aftertreatment system for use in a vehicle, comprising:
an oxidation catalyst disposed in an exhaust path between an engine block and a turbocharger,
wherein the oxidation catalyst is configured to store methane during a first temperature of a first portion of an operating engine cycle and to oxidize the stored methane during a second temperature of a second portion of the operating engine cycle, and
wherein the first temperature is less than the second temperature.

2. The system of claim 1, wherein the engine block comprises a cylinder, and wherein the cylinder provides exhaust gas directly to the oxidation catalyst.

3. The system of claim 1, comprising a back pressure valve downstream of the turbocharger in the exhaust path.

4. The system of claim 3, wherein the back pressure valve is configured to increase pressure on the oxidation catalyst to increase the temperature of the oxidation catalyst.

5. The system of claim 3, wherein the back pressure valve is configured, in a light load, to increase an engine load to increase the temperature of the oxidation catalyst.

6. The system of claim 3, wherein the back pressure valve is downstream of a diesel particulate filter in the exhaust path.

7. The system of claim 3, wherein the back pressure valve is downstream of a combined diesel oxidation catalyst and diesel particulate filter in the exhaust path.

8. The system of claim 3, wherein the back pressure valve is downstream of a three way catalyst in the exhaust path.

9. The system of claim 1, wherein the vehicle is a compression-ignition natural gas engine vehicle.

10. The system of claim 1, wherein the vehicle is a natural gas dual fuel engine vehicle.

11. The system of claim 1, wherein the vehicle is a spark-ignition natural gas engine vehicle.

12. The system of claim 1, wherein the vehicle is a spark-ignition natural gas stoichiometric engine vehicle.

13. The system of claim 1, wherein oxidation catalyst comprises a zeolite substrate with Cu and at least one of Ce(La)O₂ and/or Cu laden Zr(Y)O₂.

14. The system of claim 1, wherein the oxidation catalyst includes non-platinum group metal oxides.

15. A method of reducing methane emissions in a vehicle, comprising:
providing an oxidation catalyst in an exhaust path between an engine block and a turbocharger;
storing methane during a first temperature;
oxidizing the stored methane during a second temperature that is greater than the first temperature;
providing a back pressure valve to increase pressure in the exhaust path or to increase engine load; and
increasing the temperature from the first temperature to the second temperature by increasing, via the back pressure valve, the pressure or the engine load.
